# EUROPEAN PATENT SPECIFICATION

(11) **EP 1 124 065 B1**
(45) Date of publication and mention of the grant of the patent: **12.05.2004**
(21) Application number: 01850025.6
(22) Date of filing: 02.02.2001
(51) Int. Cl.: F16B 39/04

(54) **Lock nut**
Sicherungsmutter
Ecrou de blocage

(30) Priority: 10.02.2000 JP 2000033133
(43) Date of publication of application: 16.08.2001
(73) Proprietor: SKF MEKAN AB, S-641 21 Katrineholm (SE)
(72) Inventor: Östling, Sture, 641 25 Katrineholm (SE); Axelsson, Uno, 641 35 Katrineholm (SE)
(74) Representative: Westman, Per Börje Ingemar

(56) References cited:
- US-A- 4 227 560

## Description

The present invention refers to a lock nut of the type having a threaded main bore for receiving a threaded portion, which lock nut has a number of oblique bores in each of which is inserted a locking pin for engagement with its forward end against the threaded portion, the oblique bore and the associated locking pin having common longitudinal axis extending at substantially the same angle to the axis of the threaded main bore as one of the flanks of the thread of said threaded main bore, whereby the forward end of the lock nut thereby having at least one flank substantially parallel to said longitudinal axis and which can lie substantially parallel to the portions of said one flank of said threaded main bore adjacent the inner end of the oblique bore.

Such lock nuts are earlier known, i.e. by GB 1 561 946 A, and their purpose has been to provide a lock nut with substantially the same locking effect even after repeated use.

Each locking pin thereby has been shaped as a cylindrical dowel, having a smooth envelope surface and the locking pin was manufactured from brass. The locking faces of the pins and the thread of the main bore are machined in the same machining operation, that is the pins are inserted in their respective oblique bores with the forward end of each locking pin projecting into the not yet threaded main bore of the lock nut. This lock nut thereupon is clamped in a clamping device and is subjected to thread cutting, whereby also the forward ends of the locking pins are cut to form at least one flank each.

When the lock nut shall be arrested to the threaded portion each locking pin is tightened against the threaded portion by means of a grub screw or the like. Hereby the locking faces of the pins are pressed against the thread flanks of the threaded portion, thereby giving a locking effect provided entirely by friction forces, thereby avoiding deformation of the locking pin.

This type of lock nut has proven itself to give a reliable and efficient locking effect

For ascertaining that the locking pins are safely retained in their respective oblique bores during the thread cutting operation and afterwards when the lock nut is screwed up on the threaded portion, without risking that the brass pins move axially in the bores or angularly about their longitudinal axis, it is required that each pin fits very snugly into its bore, which means that the fitting of the pins in their respective oblique bores in the lock nut is difficult, and the material of the pin seizes against the inner envelope surface of the oblique bore.

The purpose of the present invention is to provide an improvement of the known lock nut, thus that the problems mentioned are reduced or even eliminated, and this is achieved in that the lock nut has been given the features defined in the accompanying claims.

Hereinafter the invention will be further described with reference to an embodiment illustrated in the accompanying drawings.
Fig. 1 shows in cross section a portion of a lock nut arrested to a threaded shaft, together with an enlarged portion of the locking means.
Fig. 2 is a planar side view of the novel locking pin forming part of the lock nut, and
Fig. 3 is an end view of the locking pin in somewhat bigger size.

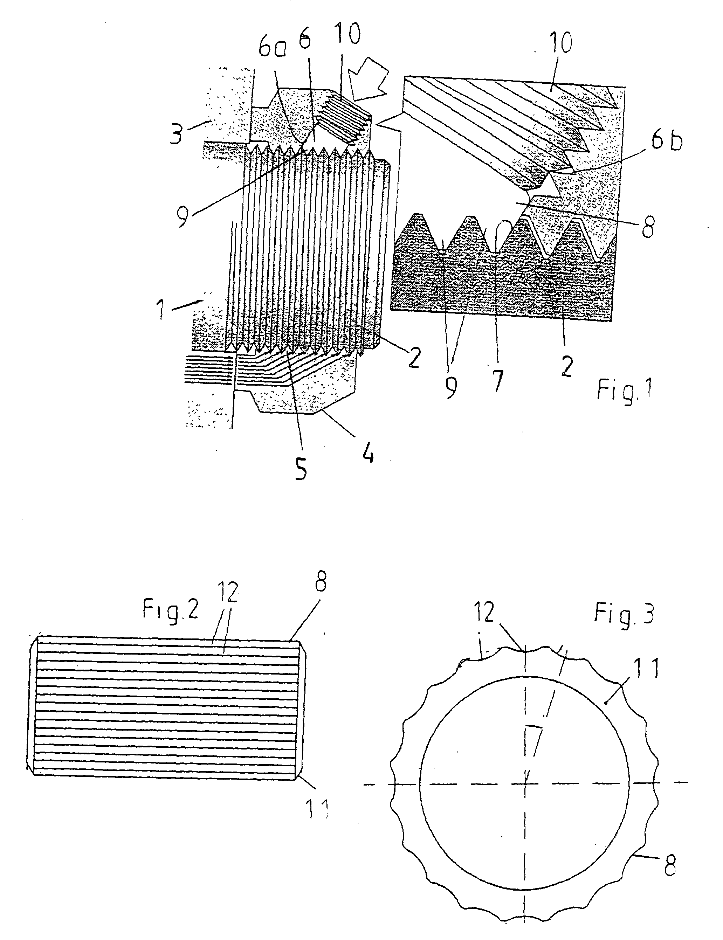

In Fig. 1 is shown a shaft 1 with a threaded portion 2, and with a machine member 3, which is locked to the shaft 1 by means of a lock nut 4 according to the invention.

The lock nut 4 has an internal main bore with a thread 5 complementary to the external thread of the threaded portion 2. Around the circumference of the lock nut 4 is provided a number of evenly spaced through bores 6 projecting from the outside of the lock nut to the main bore thereof. These bores 6 are oblique and have an inclination thus that its longitudinal axis is substantially parallel to one flank 7 of the thread in the threaded portion 2. Each oblique bore 6 has a first portion 6a being smooth and being located at the inner part of the bore, and a second, outer portion 6b, which is threaded.

In the first, inner portion 6a of each oblique bore 6 is inserted a substantially cylindrical locking pin 8. The inclination of the bore 6 causes the locking pin 8 to have its side wall coinciding with one flank of the thread in the threaded portion 2.

By inserting the locking pins 8 in the oblique bores 6 before the internal thread 5 is cut in the lock nut 4, a thread formation with locking faces 9 will be cut in the forward or inner end of the locking pin 8 in the same machining operation in which the internal thread in the lock nut is cut, and these locking faces are matching that of the threaded portion 2. In the second, outer portion 6b of the oblique bore 6 is inserted a grub screw 10 or the like, which by being tightened in the threaded portion 6b urges the locking pin 8 against the threaded portion 2. As the locking faces of the thread formation of the locking pins 8 in this position is pressed against the flanks of the threaded portion 2, the lock nut will be secured to the threaded portion 2 of the shaft 1, and the locking effect is provided entirely by friction forces between the locking faces 9 and the threaded portion 2.

Fig 2 shows the locking pin 8 in planar side view, whereas Fig. 3 shows the same locking pin 8 in an end view. The locking pin 8 here is shown before it has been machined during the thread cutting operation for the interior thread of the lock nut 4 and as can be seen the basic form is substantially a cylinder, having chamfered end portions 11, and not a smooth outer envelope surface but a number of axially extending circumferentially arranged grooves or serrations 12, evenly spaced along the circumference.

This locking pin 8 according to the invention is further not made from brass or the like but is manufactured from sintered steel, which is preferably soaked with a lubricant at manufacture. Such a locking pin 8 can be inserted in its oblique bore much easier than the earlier used brass pin with its smooth external surface, due to the fact that the friction is reduced substantially as the contact between the locking pin 8 and its bore is not over the entire surface but just over the outer line areas of the serrated surface.

The impregnation with lubricant of the sinter material locking pin further will help to reduce the friction between the locking pin 8 and its bore 6a, thereby facilitating insertion of the pin in position. The ridges of the serration 12 furthermore will prevent the pin from rotating in the bore, thereby securing that it is in correct position during and after cutting of the thread formation.

Finally the chamfers 11 at each side face of the locking pin 8 further will facilitate a correct inserting of the locking pin in the oblique bore.

The lock nut 4 has preferably three evenly spaced apart oblique bores with associated locking pins 8.

## Claims

1. A locking nut (4) having a threaded main bore for receiving a threaded portion (2), which lock nut has a number of oblique bores (6) in each of which is inserted a locking pin (8) for engagement with its forward end against the threaded portion (2), the oblique bore (6) and the associated locking pin (8) having common longitudinal axis extending at substantially the same angle to the axis of the threaded main bore as one of the flanks (7) of the thread of said threaded main bore, whereby the forward end of the lock nut thereby having at least one flank (9) substantially parallel to said longitudinal axis and which can lie substantially parallel to the portions of said one flank (7) of said threaded main bore adjacent the inner end of the oblique bore,
**characterized therein**
that the locking pin (8) is a substantially cylindrical body having along its envelope surface a plurality of evenly spaced apart axially extending serrations or grooves (12) facilitating introduction of the pin (8) in its associated bore (6).

2. A locking nut as claimed in claim 1,
**characterized therein,**
that the locking pin (8) is manufactured from sintered material, preferably steel.

3. A locking nut as claimed in claim 2,
**characterized therein,**
that the material of the sintered locking pin (8) is impregnated with a friction reducing lubricant.

## Patentansprüche

1. Sicherungsmutter (4), die eine Hauptgewindebohrung zur Aufnahme eines Gewindeabschnitts (2) und eine Anzahl von Schrägbohrungen (6) aufweist, in'welche jeweils ein Sperrstift (8) eingesetzt ist, dessen vorderes Ende den Gewindeabschnitt (2) angreift, wobei die Schrägbohrung (6) und der zugehörige Sperrstift (8) eine gemeinsame Längsachse haben, die sich in einem im wesentlichen gleichen Winkel zur Achse der Hauptgewindebohrung erstreckt wie eine der Flanken (7) des Gewindes der Hauptgewindebohrung, wobei das vordere Ende der Sicherungsmutter dadurch mindestens eine Flanke (9) aufweist, die zur besagten Längsachse im wesentlichen parallel liegt und die im wesentlichen parallel zu den Abschnitten der Flanke (7) der Hauptgewindebohrung, die an das innere Ende der Schrägbohrung angrenzen, liegen kann, **dadurch gekennzeichnet, daß** der Sperrstift (8) ein im wesentlichen zylindrischer Körper ist, der entlang seiner Mantelfläche eine Mehrzahl von in gleichmäßigem Abstand zueinander liegenden, sich axial erstreckenden Rillen oder Nuten aufweist, die das Einführen des Stiftes (8) in die zugehörige Bohrung (6) erleichtern.

2. Sicherungsmutter nach Anspruch 1 **dadurch gekennzeichnet, daß** der Sperrstift (8) aus gesintertem Material, vorzugsweise Stahl gefertigt ist.

3. Sicherungsmutter nach Anspruch 2 **dadurch gekennzeichnet, daß** das Material des gesinterten Sperrstiftes (8) mit einem die Reibung vermindernden Schmiermittel imprägniert ist.

## Revendications

1. Ecrou de blocage (4) ayant un trou principal fileté pour recevoir une partie filetée (2), lequel écrou de blocage comporte un certain nombre de trous obliques (6) où est inséré, dans chacun d'entre eux, un axe de blocage (8) destiné à se mettre en prise à l'aide de son extrémité avant contre la partie filetée (2), le trou oblique (6) et l'axe de blocage associé (8) ayant un axe longitudinal commun s'étendant en formant sensiblement le même angle par rapport à l'axe du trou principal fileté en tant que l'un des flancs (7) du filetage dudit trou principal fileté, grâce à quoi l'extrémité avant de l'écrou de blocage ayant ainsi au moins un flanc (9) sensiblement parallèle audit axe longitudinal et qui peut être sensiblement parallèle aux parties dudit flanc (7) dudit trou principal fileté en une position adjacente à l'extrémité intérieure du trou oblique,
**caractérisé en ce que** l'axe de blocage (8) est un corps sensiblement cylindrique comportant le long de sa surface d'enveloppe une pluralité de dentelures ou rainures (12) s'étendant axialement et régulièrement espacées qui facilitent l'introduction de l'axe (8) dans son trou associé (6).

2. Ecrou de blocage selon la revendication 1, **caractérisé en ce que** l'axe de blocage (8) est fait à partir d'un matériau fritté, de préférence de l'acier.

3. Ecrou de blocage selon la revendication 2, **caractérisé en ce que** le matériau de l'axe de blocage fritté (8) est imprégné d'un lubrifiant réduisant les frottements.
